(19) Europäisches Patentamt

European Patent Office

Office européen des brevets

(11) **EP 1 023 542 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(21) Anmeldenummer: **98966231.7**

(22) Anmeldetag: **16.10.1998**

(51) Int Cl.⁷: **F16D 65/12**

(86) Internationale Anmeldenummer:
**PCT/EP98/06581**

(87) Internationale Veröffentlichungsnummer:
**WO 99/023394 (14.05.1999 Gazette 1999/19)**

(54) **BREMSSCHEIBE FÜR SCHEIBENBREMSEN**

BRAKE DISC FOR A DISC BRAKING SYSTEM

DISQUE DE FREINAGE POUR FREIN A DISQUE

(84) Benannte Vertragsstaaten:
**AT BE DE ES FR GB IT NL SE**

(30) Priorität: **24.10.1997 DE 19747111**

(43) Veröffentlichungstag der Anmeldung:
**02.08.2000 Patentblatt 2000/31**

(73) Patentinhaber: **KNORR-BREMSE Systeme für Nutzfahrzeuge GmbH
80809 München (DE)**

(72) Erfinder:
• **PAHLE, Wolfgang
D-74080 Heilbronn (DE)**

• **BAUMGARTNER, Hans
D-85368 Moosburg (DE)**

(56) Entgegenhaltungen:
EP-A- 0 143 264    EP-A- 0 778 355
DE-A- 4 026 611    DE-A- 19 533 136
DE-A- 19 719 353    DE-U- 9 400 562
GB-A- 2 057 609    GB-A- 2 307 959
US-A- 5 323 883

• **PATENT ABSTRACTS OF JAPAN vol. 097, no. 011, 28. November 1997 & JP 09 194983 A (KURIMOTO LTD), 29. Juli 1997**

EP 1 023 542 B1

**Beschreibung**

Die Erfindung betrifft eine Bremsscheibe für Scheibenbremsen, insbesondere für Scheibenbremsen von Nutzfahrzeugen. Aus der EP 0 778 355 A1 ist eine derartige Bremsscheibe bekannt, welche eine Scheibendicke D1 aufweist und zwei parallel zueinander angeordnete Reibscheiben, zwischen welchen ein im wesentlichen mittig liegender Luftkanal mit einer Breite D2 ausgebildet ist. Dabei liegt das Verhältnis zwischen der Scheibendicke D1 und Luftkanaldicke D2 bei einem Scheibenrohling bei 3,6. Die Scheibenbremse besteht aus einem Graugußmaterial mit einem relativ niedrigen Molybdängehalt von 0,01 bis 0,06 Prozent.

Auch aus der WO 96/07766 (PCT/SE 95/00927) ist es bereits bekannt, einen Grauguß mit Molybdänzusatz zu versehen. Allerdings wird in dieser Schrift ausgeführt, daß ein Molybdängehalt von 0,3 Prozent oder mehr unvorteilhaft sei, da der Preis des Materials zu stark steige und die Herstellung schwierig sei.

Eine Bremsscheibe aus einem Graugußmaterial mit Molybdänanteil wird zudem in der DE 40 26 611 C2 offenbart.

Der Aufbau der gattungsgemäßen Bremsscheibe hat sich zwar prinzipiell bewährt. In diesem Zusammenhang sei auch auf die DE 195 44 559 C1 verwiesen. Verbesserungsbedarf besteht allerdings in Hinsicht auf eine weitere Verringerung der Neigung der Scheibe zur Rißbildung und in Hinsicht auf die Erhöhung der Lebensdauer der Scheibe. Selbiges Problem trifft auch für die in der DE 40 26 611 C2 offenbarte Bremsscheibe zu. Weiterer Stand der Technik, welcher sich mit Bremsscheiben und deren Werkstoffen auseinandersetzt, ist in der DE 44 26 091 A1, DE 37 04 679 A1, DE-OS 22 35 657, DE 94 00 562 U1 und der DE 87 08 264 U1 offenbart.

Die Erfindung hat ausgehend vom gattungsgemäßen Stand der Technik die Aufgabe, die Bremsscheibe hinsichtlich einer weiteren Verringerung der Neigung zur Rißbildung und in Hinsicht auf eine Erhöhung der Lebensdauer zu optimieren.

Die Erfindung löst diese Aufgabe bei der gattungsgemäßen Bremsscheibe bzw. bei Bremsscheiben, bei welchen das Verhältnis zwischen Scheibendicke D1 und Luftkanalbreite D2 die Bedingung

$$3,0 \leq D1/D2 \leq 5$$

erfüllt, daß die Bremsscheibe aus einem Graugußmaterial mit Molybdänanteil besteht, der 0,6 bis 0,8 Prozent beträgt.

Die Erfindung weicht damit wiederum von dem Trend der Fachwelt ab, nach welchem die Kühlkanalbreite möglichst zu maximieren ist, um einerseits die Kühlströme zwischen den Reibringen zu vergrößern und um andererseits das Gewicht der Bremsscheibe zu minimieren. Die Erfindung nutzt dabei die Erkenntnis, daß dem Parameter "Scheibengewicht" in der Vergangenheit möglicherweise zuviel Aufmerksamkeit geschenkt wurde. Ein weiteres Merkmal der erfindungsgemäßen Bremsscheibe ist im Werkstoff zu sehen, nach dem ein hoher Molybdängehalt des Graugusses zwischen 0,6 und 0,8 Prozent nochmals zu einer deutlichen Erhöhung der Lebensdauer der Scheibe beiträgt. Im Versuch haben sich Lebensdauererhöhungen von mehr als 40 Prozent, typischerweise sogar 60 Prozent gegenüber Varianten ohne Molybdänanteil ergeben.

Die Erfindung erhöht zudem durch die Wahl der Kühlkanalbreite einerseits die Wärmekapazität und die Steifigkeit der Bremsscheibe und reduziert dabei die Bremsscheibe auf ein echtes Minimum. So wird im Versuch unter Extrembedingungen die Standzeit bis zu einem Durchriß oftmals sogar verdoppelt und damit die Lebensdauer der Scheibe deutlich erhöht. Dennoch ist das Abkühlverhalten nur unwesentlich schlechter als bei Lösungen des Standes der Technik, bei dem das Verhältnis D1/D2 ca. bei 2,5 bis 2,8 liegt.

Besonders bevorzugte Varianten der Erfindung zeichnen sich dadurch aus, daß das Verhältnis zwischen Scheibendicke und Luftkanalbreite die Bedingung $3,5 \leq D1/D2 \leq 4$ erfüllt. Dabei eignet sich die Erfindung insbesondere für Bremsscheiben mit einem Durchmesser, der größer oder gleich 300 mm ist (z.B. 430 bis 460 mm), wobei die Dicke D1 ca. 45 mm und die Luftkanalbreite D2 12 mm beträgt. Diese Bremsscheibenauslegung ist beispielsweise für Nutzfahrzeug-Scheibenbremsen mit 22,5" (571,5 mm) geeignet, insbesondere ist sie für Nutzfahrzeugscheibenbremsen mit einem Verhältnis zwischen Scheibeninnendurchmesser und Scheibenaußendurchmesser bei 0,6 vorteilhaft.

Nach der Erfindung besteht die Bremsscheibe aus einem Graugußmaterial (Eisen, Spuren anderer Legierungsmetalle und ggf. verschmelzungsbedingte Verunreinigungen) mit dem angegebenen Molybdänanteil (Mo). Gegenüber konventionellen Bremsscheiben bietet die erfindungsgemäße Bremsscheibe eine Lebensdauererhöhung um einen Faktor 3 bis 4, ohne daß dabei die Verschleißempfindlichkeit des Bremsbelages nennenswert zunehmen würde. Bevorzugt liegt dabei der Molybdängehalt des Graugusses zwischen 0,75 % und 0,76 %, insbesondere bei 0,752 %. Ein besonderer Vorteil des hohen Molybdängehaltes besteht dabei darin, daß das Molybdän als Mikrokarbitbilder das Fortschreiten von Hitzerißansätzen in der Bremsscheibe unterbindet. Im Gegensatz zum bekannten Mikrokarbitbilder Niob erhöht Molybdän dabei auch die Warmfestigkeit des Graugusses. Insbesondere in Kombination mit der geometrischen Auslegung der Erfindung ergibt sich eine derartige Lebensdauererhöhung der Scheibe, daß es sich eben doch lohnt, den Mo-Gehalt deutlich weiter zu erhöhen.

Zweckmäßigerweise enthält der Grauguß ferner Chrom (Cr) mit einem Gehalt von 0,2 bis 0,3 %. Chrom bildet in Verbindung mit dem Moybdän das Mikrokarbit. Bevorzugt weist der Bremsscheiben-Grauguß insgesamt folgende Zusätze auf: C: 3,8 - 4 %, Si: 1,4 - 1,8 % Mn: 0,6 - 0,8 %, P: < 0,1 %, S: < 0,12 %, Cr: < 0,2 - 0,3 %, Cu: < 0,2 %, Ni: < 0,1 %, Mo: 0,6 bis 0,8 % und V: < 0,1 %.

Nachfolgend wird die Erfindung unter Bezug auf die Zeichnung näher beschrieben. Es zeigt:

Figur 1  eine teilgeschnittene Ansicht einer erfindungsgemäßen Bremsscheibe und

Figur 2  Versuchsdiagramme von Hitzrißtesten.

Die Bremsscheibe 1 weist zwei über Stege 2 miteinander verbundene Reibscheiben 3,4 auf, so daß sich zwischen den parallel zueinander ausgerichteten Reibscheiben 3,4 ein Luft- und Kühlkanal 5 bildet. Am inneren Umfang der Reibscheibe 3 ist ein topfartiger Ansatz 6 zum Befestigen der Bremsscheibe I an einer Radachse angeformt. Die Bremsscheibe 1 kann allerdings auch mehrteilig - z.B. nach der Art der DE 195 44 559 C1 - und/oder gebrochen ausgeführt sein.

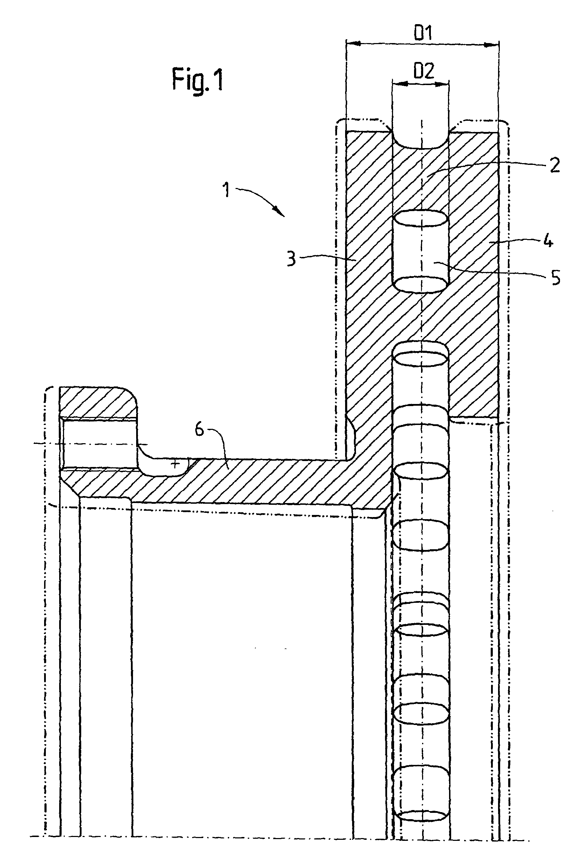

Die in Fig. 1 dargestellte Bremsscheibe 1 wird in der Praxis derart realisiert, daß die Gesamtscheibendicke D1 45 mm und die Luftkanalbreite D2 12 mm beträgt. Bei Bremsscheiben, deren Luftkanal keine konstante Breite aufweist, bestimmt sich das Breitenmaß D2 nach der engsten Stelle. Es ergibt sich somit ein Verhältnis D1 zu D2 von 3,75 (bei einem Scheibendurchmesser von 430 - 460mm für 22,5"-Felgen). Nach dem Stand der Technik wurde die Luftkanalbreite eher bei 17 - 18 mm angesiedelt. Die Masse der Bremsscheibe erhöht sich dabei in Abhängigkeit von der Kühlkanalgeometrie (Steggröße usw.) nur um ca. 2 - 3 kg. Hierbei wirkt sich zudem vorteilhaft aus, daß bei gleicher Energiezufuhr die Temperatur der Bremsscheibe weniger erhöht wird als bei größerer Luftkanalbreite und somit geringerer Wärmekapazität.

Eine weitere Verringerung der Kühlkanalbreite D2 ist aus fertigungstechnischen Gründen unwirtschaftlich, da der Sandkern für das Ausbilden des Lüftkanales beim Giessen der Bremsscheibe nicht mehr handhabbar ist. Das beanspruchte Verhältnis zwischen den Größen D1 und D2 stellt vielmehr eine Optimierung der Bremsscheibengeometrie in Abhängigkeit der Parameter Rißgefahr, Gewicht, Abkühlverhalten, Herstellbarkeit und Wirtschaftlichkeit dar.

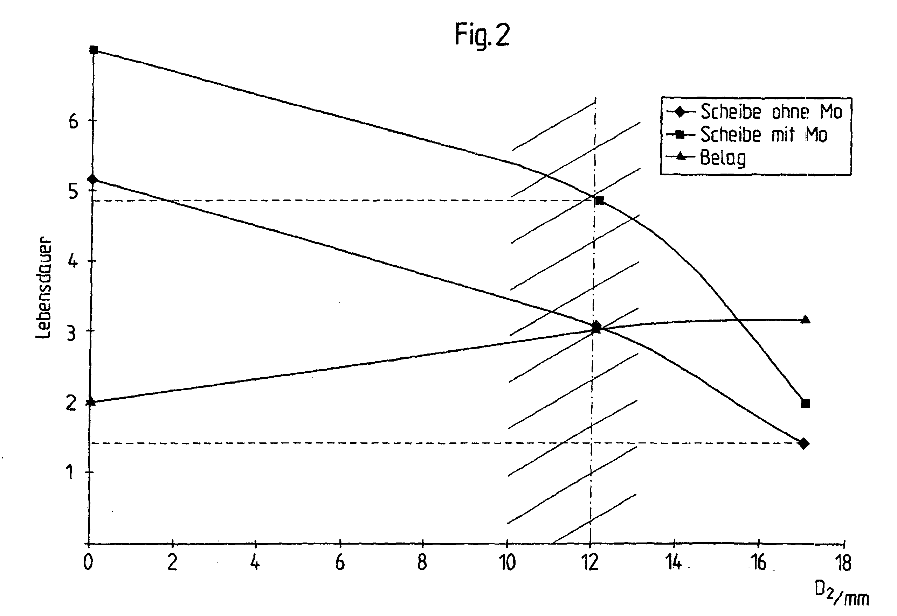

Fig. 2 zeigt beispielhaft anhand von Versuchsdiagrammen von üblichen Belastungs-Hitzrißtesten, daß bei Nutzfahrzeug-Bremsscheiben mit einer Dicke D1 von 45 mm und mit einem Verhältnis zwischen Scheiben-Innendurchmesser und Scheiben-Außendurchmesser bei 0,6 bei einer Verringerung der Luftkanalbreite auf ca. 12 mm (bzw. auf einen Wert im gestrichelt gezeichneten Korridor um 12 mm) bereits bei einer Scheibe ohne Mo eine deutliche Verlängerung der Scheibenlebensdauer gegenüber der Lebensdauer einer entsprechenden Scheibe mit einer Luftkanalbreite D2 von 17 mm erzielbar ist. Im Vergleich zur Lebensdauer der "17mm-Luftkanal-Scheibe" nimmt die Lebensdauer bei einer Verringerung der Luftkanalspaltbreite auf 12 mm bereits um mehr als 100 % zu. Bei einer Bremsscheibe aus einem Grauguß mit einem Molybdängehalt bei 0,6 - 0,8 %, insbesondere bei 0,75 % (und folgenden weiteren Zusätzen: C: 3,8 - 4%, Si: 1,4 - 1,8%, Mn: 0,6 - 0,8%, P: < 0,1%, S: < 0,12%, Cr: < 0,2 - 0,3%, Cu: < 0,2%, Ni: <0,1%, und V: < 0,1%) steigt die Lebensdauer nochmals deutlich an, insbesondere dann, wenn auch die Luftkanalbreite der Scheibe mit Mo-Zusatz bei 12mm liegt. Die Lebensdauer des Belages wird durch die Verringerung der Luftkanalbreite nur minimal bzw. nicht nennenswert herabgesetzt.

**Patentansprüche**

1. Bremsscheibe für Scheibenbremsen, insbesondere für Scheibenbremsen von Nutzfahrzeugen, mit

   - einer Scheibendicke D1 und mit zwei parallel zueinander angeordneten Reibscheiben (3,4), zwischen welchen ein im wesentlichen mittig liegender Luftkanal (5) mit einer Breite D2 ausgebildet ist,
   - wobei das Verhältnis zwischen Scheibendicke D1 und Luftkanalbreite D2 die Bedingung

   $$3,0 \leq D1/D2 \leq 5$$

   erfüllt, und
   - wobei die Bremsscheibe aus einem Graugußmaterial mit Molybdänanteil (Mo) besteht, der 0,6 bis 0,8 % beträgt.

2. Bremsscheibe nach Anspruch 1, **gekennzeichnet durch** einen Durchmesser von wenigstens 300 mm oder mehr.

3. Bremsscheibe nach Anspruch 3, **gekennzeichnet durch** einen Durchmesser von 430 - 460 mm.

4. Bremsscheibe nach einem der vorstehenden Ansprüche, **gekennzeichnet durch** eine Scheibendicke D1 von ca. 45 mm.

5. Bremsscheibe nach einem der vorstehenden Ansprüche, **gekennzeichnet durch** eine Luftkanalbreite D2 von 12 mm.

6. Bremsscheibe nach einem der vorstehenden Ansprüche, **dadurch gekennzeichnet; daß** das Verhältnis zwischen Scheiben-Innendurchmesser und Scheiben-Außendurchmesser bei 0,6 liegt.

7. Bremsscheibe nach einem der vorstehenden Ansprüche, **gekennzeichnet durch** eine Auslegung für 22,5"-Felgen (571,5 mm).

**8.** Bremsscheibe nach einem der vorstehenden Ansprüche, **dadurch gekennzeichnet, daß** die beiden Reibscheiben (3,4) gleich dick sind.

**9.** Bremsscheibe nach einem der vorstehenden Ansprüche, **dadurch gekennzeichnet, daß** die beiden Reibscheiben (3,4) über Stege miteinander verbunden sind.

**10.** Bremsscheibe nach einem der vorstehenden Ansprüche, **dadurch gekennzeichnet, daß** die Bremsscheibe (1) als gebrochene, mehrteilige Bremsscheibe (1) ausgeführt ist.

**11.** Bremsschiebe nach einem der vorhergehenden Ansprüche, **dadurch gekennzeichnet, daß** der Mo-Gehalt des Graugusses 0,75 % bis 0,76 % beträgt.

**12.** Bremsscheibe nach einem der vorstehenden Ansprüche, **dadurch gekennzeichnet, daß** der Grauguß Chrom (Cr) enthält.

**13.** Bremsscheibe nach Anspruch 12, **dadurch gekennzeichnet, daß** der Cr-Gehalt des Graugusses 0,2 bis 0,3 % beträgt

**14.** Bremsscheibe nach einem der vorstehenden Ansprüche, **dadurch gekennzeichnet, daß** der Grauguß folgende Zusätze aufweist:

C: 3,8% - 4%,
Si: 1,4% - 1,8%,
Mn: 0,6% - 0,8%,
P: < 0,1%,
S: < 0,12%,
Cr: < 0,2% - 0,3%,
Cu: < 0,2%,
Ni: <0,1%,
Mo: 0,6% bis 0,8%, und
V: < 0,1%.

**15.** Bremsscheibe nach einem der vorstehenden Ansprüche, **dadurch gekennzeichnet, daß** das Verhältnis zwischen Scheibendicke D1 und Luftkanalbreite D2 die Bedingung

$$3,2 \leq D1/D2 \leq 4$$

erfüllt.

## Claims

**1.** Brake disc for disc brakes, in particular for disc brakes of utility vehicles, having

- a disc thickness D1 and two friction discs (3, 4) arranged in parallel with each other, between which a substantially centrally located air duct (5) with a width D2 is formed,
- with the ratio between the disc thickness D1 and the width D2 of said air duct satisfies the condition

$$3,0 \leq D1/D2 \leq 5$$

and
- wherein the brake disc consists of a grey cast iron material with a molybdenum fraction (Mo) that amounts to 0.6 to 0.8 %.

**2.** Brake disc according to Claim 1, **characterised by** a diameter of at least 300 mm or more.

**3.** Brake disc according to Claim 3, **characterised by** a diameter of 430 to 460 mm.

**4.** Brake disc according to any of the preceding Claims, **characterised by** a disc thickness D1 of 45 mm approximately.

**5.** Brake disc according to any of the preceding Claims, **characterised by** a width D2 of said air duct of 12 mm.

**6.** Brake disc according to any of the preceding Claims, **characterised in that** the ratio between the internal diameter of the disc and the outside diameter of the disc ranges at 0.6.

**7.** Brake disc according to any of the preceding Claims, **characterised by** a design for 22.5" wheel rims (571.5 mm)

**8.** Brake disc according to any of the preceding Claims, **characterised in that** said two friction discs (3, 4) are of equal thickness.

**9.** Brake disc according to any of the preceding Claims, **characterised in that** said two friction discs (3, 4) are joined together by webs.

**10.** Brake disc according to any of the preceding Claims, **characterised in that** the brake disc (1) is configured as a discontinuous multi-part brake disc (1).

**11.** Brake disc according to any of the preceding Claims, **characterised in that** the Mo fraction in said grey cast iron amounts to 0.75 % to 0.76 %.

**12.** Brake disc according to any of the preceding Claims, **characterised in that** said grey cast iron contains chromium (Cr).

**13.** Brake disc according to Claim 12, **characterised in that** the Cr percentage in said grey cast iron amounts to 0.2 to 0.3 %.

**14.** Brake disc according to any of the preceding Claims, **characterised in that** said grey cast iron contains the following additives:

C: 3.8 % - 4 %
Si: 1.4%-1.8%
Mn: 0.6%-0.8%
P: < 0.1
S: < 0.12 %
Cr: < 0.2 % - 0.3 %
Cu: < 0.2 %
Ni: < 0.1 %
Mo: 0.6 % to 0.8 %, and
V: < 0.1 %.

**15.** Brake disc according to any of the preceding Claims, **characterised in that** the ratio between the disc thickness D1 and the width D2 of said air passage satisfies the condition

$$3.2 \leq D1/D2 \leq 4.$$

**Revendications**

**1.** Disque de frein pour freins à disque, en particulier pour disques de frein dans des véhicules utilitaires, ayant

- une épaisseur de disque D1 et deux disques de friction (3, 4) disposés l'un en parallèle à l'autre, à un conduit d'air (5) en arrangement essentiellement central étant formé y entre et présentant une largeur D2,
- le rapport entre l'épaisseur de disque D1 et la largeur D2 dudit conduit d'air répondant à la condition

$$3,0 \leq D1/D2 \leq 5$$

et
- dans laquelle un disque de frein est fait en un matériau en fonte grise à une fraction de molybdène (Mo), qui correspond à une valeur entre 0,6 et 0,8 %.

**2.** Disque de frein selon la revendication 1, **caractérisée par** un diamètre d'au moins 300 mm ou plus.

**3.** Disque de frein selon la revendication 3, **caractérisée par** un diamètre de 430 à 460 mm.

**4.** Disque de frein selon une quelconque des revendications précédentes, **caractérisée par** une épaisseur de disque D1 de 45 mm environ.

**5.** Disque de frein selon une quelconque des revendications précédentes, **caractérisée par** une largeur D2 dudit conduit d'air de 12 mm.

**6.** Disque de frein selon une quelconque des revendications précédentes, **caractérisée en ce que** le rapport entre le diamètre intérieur de la disque et le diamètre extérieur de la disque correspond à 0,6 environ.

**7.** Disque de frein selon une quelconque des revendications précédentes, **caractérisée par** une configuration pour des jantes de 22,5" (571,5 mm)

**8.** Disque de frein selon une quelconque des revendications précédentes, **caractérisée en ce que** lesdits deux disques de friction (3, 4) ont la même épaisseur.

**9.** Disque de frein selon une quelconque des revendications précédentes, **caractérisée en ce que** lesdits deux disques de friction (3, 4) sont joints l'un à l'autre par des entretoises.

**10.** Disque de frein selon une quelconque des revendications précédentes, **caractérisée en ce que** la disque de frein (1) est configurée sous forme d'une disque de frein non continue à plusieurs parties (1).

**11.** Disque de frein selon une quelconque des revendications précédentes, **caractérisée en ce que** la fraction de Mo dans ledit matériau en fonte grise correspond à une valeur entre 0,75 % et 0,76 %.

**12.** Disque de frein selon une quelconque des revendications précédentes, **caractérisée en ce que** ledit matériau en fonte grise contient du chrome (Cr).

**13.** Disque de frein selon la revendication 12, **caractérisée en ce que** la fraction de Cr dans ledit matériau en fonte grise correspond à une valeur entre 0,2 et 0,3 %.

**14.** Disque de frein selon une quelconque des revendications précédentes, **caractérisée en ce que** ledit matériau en fonte grise contient les additifs suivants:

C: 3,8 % - 4 %
Si: 1,4 % - 1,8 %
Mn: 0,6 % - 0,8 %

P: < 0,1
S: <0,12%
Cr: < 0,2 % - 0,3 %
Cu: < 0,2 %
Ni: < 0,1 %
Mo: 0,6 % à 0,8 %, et
V: < 0,1 %.

**15.** Disque de frein selon une quelconque des revendications précédentes, **caractérisée en ce que** le rapport entre l'épaisseur de disque D1 et la largeur D2 dudit conduit d'air répond à la condition

$$3,2 \leq D1/D2 \leq 4.$$

Fig.1

Fig.2